# EUROPEAN PATENT SPECIFICATION

(11) **EP 2 042 836 B1**
(45) Date of publication and mention of the grant of the patent: **02.03.2011**
(21) Application number: 07117276.1
(22) Date of filing: 26.09.2007
(51) Int. Cl.: G01C 22/00, G01C 21/34

(54) **Method and system for planning the route for an athlete**
Verfahren und System zur Routenplanung für einen Athleten
Procédé et système de planification du voyage d'un athlète

(43) Date of publication of application: 01.04.2009
(73) Proprietor: Vodafone Holding GmbH, 40213 Düsseldorf (DE)
(72) Inventor: Weisscher, Alard, 6231LG Meerssen (NL); Slegers, Karin, 6227RM Maastricht (NL)
(74) Representative: Cullinane, Marietta Bettina

(56) References cited:
- WO-A-01/42809
- JP-A- 2006 079 183
- US-A1- 2005 250 458
- US-A1- 2007 156 333

## Description

The present invention relates to a method and system for planning a route for an athlete.

Navigation systems for vehicles are widely known. These navigation systems calculate a route for a vehicle from a start point to an endpoint and output the route on a map on a display. For pedestrians different criteria have to be considered when calculating a map. In US 2001/0025222A1 a method and a system for providing walking instructions is described. In this document a walking route is calculated in combination with information about driving to or close to the desired destination. When calculating the walking routes, the navigation program uses data in a geographic database to assess the suitability of the roads around the desired destination for pedestrian travel.

Even though the suggested method and system may be suitable for a driver who needs directions from a parking spot to his final destination, the method and system can not address the needs of an athlete who wished to exercise.

In WO 01 / 42809 A1 a system for automatic monitoring real-time athletic performance of a user is described. The monitoring is performed by GPS. In this document opportunities of monitoring an athlete and his performance during his training or exercise are disclosed. The monitoring may be beneficially used by an athlete preparing for a race with a particular elevation profile. This athlete may benefit from a digital elevation model database to engineer a local training route having a similar elevation profile to that of the race. One disadvantage of this method is that the individual needs of an athlete, in particular a training scheme cannot be addressed.

In the abstract of JP 2006079183 A a practice support device and program for athletes are described. Herein the training results of a person on a running course are measured. These results are stored as user data and are sorted for each section of the running course. This data is then compared to results in an athletic contest. From this comparison a practice running course similar to the contest course is extracted. The differences between the results on the practice course and the contest course are calculated and the difference results are presented to the user. Also with this approach a training scheme which may be independent from an athletic contest cannot be addressed when determining a route for the athlete.

Athletes, for example runners, often do interval training sessions which include various types of training. A typical training session for a runner normally consists of warming up, walking, jogging, running at maximum speed, walking and stretching. Each of these types of training requires specific types of a route. For example when running at maximum speed it would be very inconvenient to cross a busy road or to have to wait for a traffic light. Also, many athletes have little time for their training sessions, so they want to plan these sessions as efficiently as possible. In the ideal situation, the session would end at exactly the same spot as it was started, so no time would be lost at walking back home or to the car after finishing the training session.

It is hence an object of the present invention to provide a method and system for providing athletes with a route suitable for their needs.

According to a first aspect of the invention, this problem is solved by a method for planning a route for an athlete, wherein a processing unit determines a route. The method is **characterized in that** the determination of the route comprises the step of calculating the length of individual sections of the route, that the sum of the individual sections is the length of the determined route, that each section is defined by an exercise to be performed by the athlete in this section and that at least part of the determined route is matched by the processing unit against map data.

By determining a route and subsequently matching it against map data, the needs of the athlete and different requirements for different parts of the route can be observed. Rather than calculating a route according to map data as is done in the prior art solutions, the inventive approach first determines the route and then selects the locations or paths to be used in the route. The thus planned route will provide the athlete with a route suited for the intended exercise.

According to the present invention, the route which is ultimately output to the athlete will be referred to as the planned route. The planned route will be the result of the determination of a route and the subsequent matching of the determined route with map data.

The determination of the route comprises the step of calculating the length of individual sections of the route. Each section is defined by an exercise to be performed by the athlete in this section. The length of the section can thus be calculated by using the average speed of the athlete and the intended time of the exercise. The sum of all individual sections will provide the length of the entire route.

According to a preferred embodiment, the determination of the route comprises the step of assigning at least one criterion to at least one section of the route. The criterion may be the mentioned type of exercise and duration of the exercise. These criteria are used to calculate the length of the individual sections. In addition or alternatively, criteria relating to the conditions of the path or the location of the path may be used. These criteria will hereinafter also be referred to as condition related information and may for example comprise topological, street, location and/or traffic information. These criteria can be dependent on the exercise to be performed or can be preferences of the athlete.

The matching of the determined route comprises the comparison of condition related data of the map data with at least one criterion assigned to the determined route, in particular with condition related information. The condition related information assigned to the calculated route or route sections is assigned based on the exercise to be performed or based on the preferences of the athlete. In addition, other criterion such as position information may be used as a criterion to be compared to the map data. The position information may for example be the intended start point for the route and the intended finish point. By matching condition related information and, where applicable, also position information with map data, a suitable path on the map can be selected which will fulfill the needs of the athlete and the requirements of the exercise(s).

According to one embodiment of the inventive method, the processing unit accesses a database with personal entries of the athlete for obtaining personal values for calculating the length of the individual sections of the route. The personal values may be stored in a personal profile of the athlete. The personal values may comprise the average speed of the athlete for a specific exercise. Also an exercise scheme, where different exercises and the respective duration of each exercise as well as the sequence of the exercises are defined, may be stored in the database.

The processing unit may furthermore access a database with personal entries of the athlete for obtaining personal settings for assigning at least one criterion to at least one section of the route. These personal entries, which will also be referred to as preferences, may be stored in the same database as the personal values relating to speed and exercise schemes. The personal preferences may comprise preferred start and finish points for routes, preferred areas and/or areas which should be avoided. In addition, other preferences such as preferred road surface for specific exercises, e.g. pavement or soil, may be included in the personal entries. By considering these personal entries for assigning criteria to at least part of the route, the preferences of the athlete can be considered in planning the route.

According to one embodiment, the processing unit includes external input for calculating the length of the route and/or for assigning at least one criterion to at least one section of the route. The external input may be provided by the athlete before starting the route planning and may for example be the start and end point of the route.

The method according to the present invention is preferably also carried out when the athlete is using the route. By planning the route during the exercise of the athlete changes that occur during the exercise can be accounted for. For example, if the athlete does not reach his average speed during one of the exercises, the subsequent route may be recalculated and the route plan may be adapted. In this case, the external input will be provided during the exercise of the athlete. The input may be generated by a monitoring system which monitors the speed and/or location of the athlete.

According to one embodiment of the invention, the processing unit receives information for determining the route from a training or coaching system. Such training or coaching systems which may also be virtual coaching systems, may process data such as previously achieved speeds of the athlete or current conditions of the athlete, such as his current speed. By connecting such a coaching system to the inventive route planer, the athlete will be able to use data stored in the coaching system for the route planning and does not have to reenter information for the route planning.

The at least one criterion for determining the route is preferably derived from the exercise type for at least one section of the route. The association of the criterion to the exercise type may be laid down in a database or may be provided by a training or coaching system. The criterion may be for example the condition of the road to be used for the exercise, such as the slope of the road, the traffic conditions of the road and so on.

The route is preferably determined based on route definitions and training definitions. Route definitions may include the start point, the endpoint of the intended route, condition related information of the route, such as steepness, pavement, traffic conditions, as well as preferred and excluded areas. The training definitions may include the exercise type, the duration of the exercise and the sequence of the exercises. The training definitions are preferably defined in an exercise scheme. By including both route and training definitions in the determination of the route, the route to be selected based upon these definitions will fulfill the requirement of the athlete.

According to a further aspect, the present invention relates to a system for planning a route for an athlete. The system is **characterized in that** it comprises a processing unit having a determining unit for determining a route by calculating the length of individual sections of the route, wherein the sum of the individual sections is the length of the determined route, wherein each section is defined by an exercise to be performed by the athlete in this section and a matching unit for matching at least part of the determined route against map data. By providing a separate determining unit and a separate matching unit, it will be possible to first calculate the route and assign specific criteria to the route before matching it with available paths.

The system may further comprise access to a database for condition related information and/or to a database for personal profiles. The access may be provided by respective interfaces to the databases. Alternatively, the database or databases may be included within the system.

The processing unit preferably has an input interface for input from a user and/or from a training or coaching system. The input interface may be connected to an input device such as a keyboard. If the system is located in a central location, e.g. on the Internet, the input interface may be provided by the access to the system from a PC or other terminal.

The matching unit preferably comprises a comparison unit for comparing criteria of the determined route with condition related map data. By comparing the criteria with the condition related map data the most suitable paths can be selected for the determined route.

The system is preferably at least partially implemented in a portable device, in particular a mobile phone. At least the output device of the inventive system should be included in the portable device. Thereby the athlete can be provided with information on the planned route during his exercise. The further units of the inventive system, in particular, the processing unit may be realized at a remote unit, such as a network server. In this case the connection to a coaching system which is preferably also implemented centrally, e.g. on a web server can easily be realized.

The system may be realized as hardware and/or software units. The system is preferably laid out to perform the inventive method.

Features and advantages, which are described with respect to the inventive method, also apply for the inventive system and vice versa.

The invention will now be described again with reference to the enclosed figures, wherein:
Figure 1 shows a schematic block diagram of one embodiment of the inventive system; and
Figure 2 shows a flow chart of one embodiment of the inventive method.

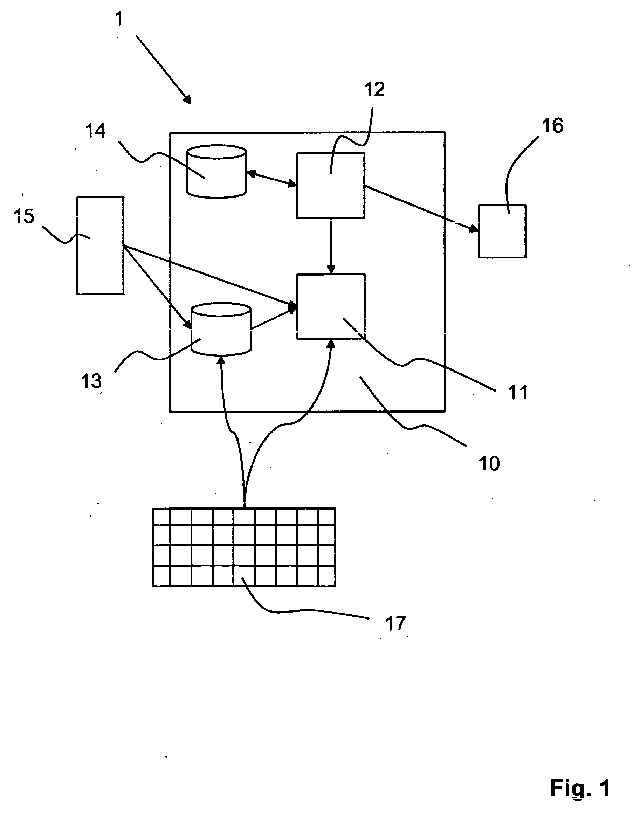

The system 1 shown in Figure 1 comprises a processing unit 10 having a determination unit 11 and a matching unit 12. The determination unit 11 has access to a database 13, where personal profiles are stored. The matching unit 12 has access to a database 14 for map data. An external coaching system 15 is shown, which is connected to the database 13 for personal profiles and to the determination unit 11. The database 13 for personal profiles and the determination unit 11 are also connected to an input device 17 which is schematically depicted as a keyboard. The matching unit 12 is connected to an output device 16, which may be a display or a loud speaker.

In the database 13 for personal profiles information specific to the individual athlete are stored. In particular, information about exercises which the athlete performs and the average speed of the athlete for this exercise are stored. In addition, condition related information such as the road type to be used for the specific exercise, the road surface as well as traffic information such as the traffic density of the street to be used, the presence of traffic lights and necessity of street crossings can be stored in the profile of the athlete. The road type may comprise indications such as pedestrian roads, roads for pedestrians and cyclists and sidewalks. The road surface may be defined as solid or soft. The entry for the road surface may, however, also comprise information such as pavement or soil. Athletes are able to include and exclude requirements themselves. Table 1 provides an example of a profile for a runner.

**Table 1**

| | **average speed (km/h)** | **road type** | **road surface** | **traffic density** | **traffic lights accepted** | **crossings accepted** |
|---|---|---|---|---|---|---|
| **stretching** | 0 | pedestrians only | / | / | Yes | Yes |
| **walking** | 5 | pedestrians only | / | / | Yes | Yes |
| **low speed** | 8 | pedestrians & cyclists | solid | moderate | Yes | Yes |
| **moderate speed** | 10 | pedestrians & cyclists | solid | Low | No | Yes |
| **top speed** | 12 | pedestrians & cyclists | solid | Low | No | No |

It should be noted that the indicated exercises, i.e. stretching, walking, low speed running, moderate speed running and top speed running are only examples. The profile may in addition or alternatively comprise exercises like stretching, biking, swimming and so on.

In addition, the personal profile of the athlete stored in database 13 may comprise an exercise scheme or a scheme for a training session. This scheme can be set up by the athlete or a coach via the input device 17. Alternatively, the scheme can be set up by a coaching system 15, which is also referred to as a virtual coaching system. In the latter case, the scheme may be provided to the determination unit 11 directly, i.e. does not have to be stored in the database 13 for personal profiles. The exercise or training scheme includes the types of exercise for a specific session in chronological order and the time intervals of each type of exercise.

If the scheme is provided by the coaching system 15, which may be a virtual coaching system, the schedule of a specific training session can be indicated in a module. This module is coupled with the processing unit 10 and can thereby specify the route requirements of each part of the training session.

Based on the average speeds in the exercise scheme or personal profile, the determination unit 11 may calculate the distance that will be covered in that particular session, i.e. calculate the length of the section of the route. Table 2 shows an example of such a calculation.

**Table 2**

| | | **time interval (minutes)** | **speed (km/h)** | **covered distance (km)** |
|---|---|---|---|---|
| **Start point** | Work | | | |
| **Warming up** | walking | 5 | 5 | 0,4 |
| | low speed | 10 | 8 | 1,3 |
| | stretching | 5 | 0 | 0,0 |
| **Endurance** | moderate speed | 30 | 10 | 5,0 |
| **Interval** | moderate speed | 5 | 10 | 0,8 |
| | top speed | 2 | 12 | 0,4 |
| | moderate speed | 5 | 10 | 0,8 |
| | top speed | 2 | 12 | 0,4 |
| | moderate speed | 5 | 10 | 0,8 |
| | top speed | 2 | 12 | 0,4 |
| | moderate speed | 5 | 10 | 0,8 |
| | top speed | 2 | 12 | 0,4 |
| **Cooling down** | moderate speed | 10 | 10 | 1,7 |
| | low speed | 10 | 8 | 1,3 |
| | walking | 5 | 5 | 0,4 |
| | stretching | 5 | 0 | 0,0 |
| **End point** | Home | | | |

Based on the covered distances and the parameters of each type of training from the user profile, the system can now determine the route for the athlete.

The thus determined route can be matched at the matching unit 12, where information from the database 14 is available. The ideal route is selected based on matches of the criteria of the determined route such as road surface and road type with map data.

For this reason, the database 14 for map data does not only include information on geographical locations and roads but also on condition related facts such as road surface, traffic density and so on.

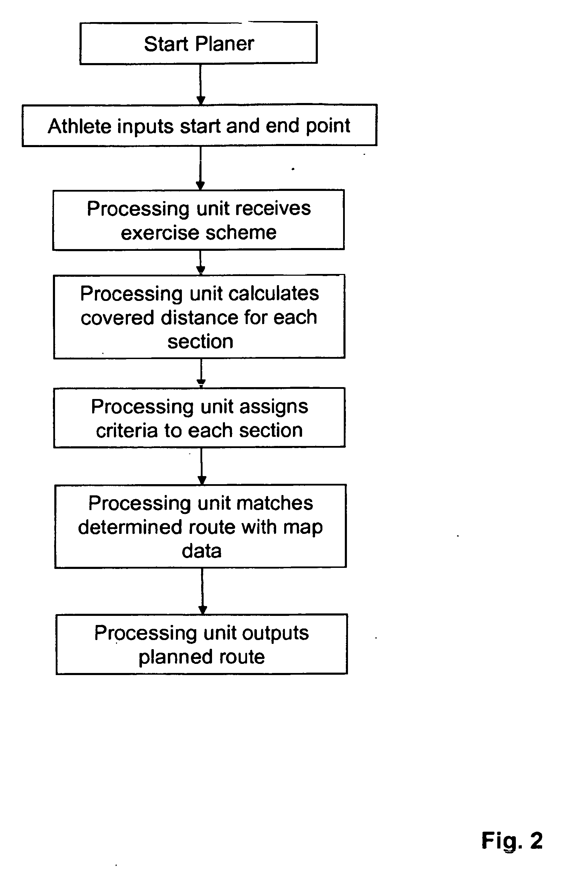

In Figure 2 one embodiment of the inventive method is shown. An athlete starts the route planner, i.e. initiates the method. At this point, the athlete inputs the intended start and end point of the route. For example, the user may want to exercise on his way home from work. In this case the start point would be the location of the work place and the end point would be the location of his home. Subsequently, the processing unit will receive or obtain the intended exercise scheme, where the exercises which are to be preformed, their duration and the sequence are defined. This scheme will be obtained or received from the database 13 or the coaching system 15. Based on this information, the length of each section of the route, i.e. the distance covered during one exercise will be calculated.

Subsequently or simultaneously, the criteria to be fulfilled for the respective exercise will be assigned to the respective sections. For example, a section, where the athlete intends to walk, will be assigned the criterion of the road type having to be for pedestrians only.

The information about the length of each section together with the criteria that have to be fulfilled will be transmitted to the matching unit 12. In the matching unit 12 this information will be compared against data derived from the database 14. In particular, for each section a suitable path will be selected. As also the sequence of the sections will be known to the matching unit 12, the matching unit 12 can select the appropriate path. The thus planned route can be output to the athlete via the output device 16, which may be a display.

The steps indicated in Figure 2 may also be performed in a different order and may partially be omitted. For example, the input of the start point and end point may be performed after the assigning of the criteria to the calculated route.

With the present invention it will become possible to link a route planer with a virtual coaching module indicating the exact schedule of the training session. The route planer could calculate a route to make sure that the specific route requirements, for example slope, presence of crossings, paved/unpaved surface, presence of vehicles, etc. are met for each of the training session's intervals. Also, the route planer could make sure that the training session ends at exactly the same spot as where it started, or at any spot indicated by the user, e.g. when the user runs home after work. A user could indicate which regions should be avoided when calculating routes. For example, regions could be avoided due to exhaust fumes, unsafe neighborhood or because of different reasons.

The ideal route is selected on a route planer including information that is also included in the exercise profile, e.g. surface, traffic density, number and location of traffic lights, number of crossings, etc. This route is flexible and is adjusted if necessary during the training session. The user or athlete can set the start point and the end point to enable efficient planning of the training sessions. Also, neighborhoods or areas that a user wants to avoid, for example because of safety, bad road surface, etc. can be set.

With the present invention, the user is provided with the ideal route for a specific training session and each training session is planned as effectively as possible.

### Reference Numbers

- 1: System
- 10: Processing unit
- 11: determination unit
- 12: matching unit
- 13: database with personal profiles
- 14: database with map data
- 15: coaching system
- 16: output device
- 17: input device

## Claims

1. Method for planning a route for an athlete, wherein a processing unit (10) determines a route, **characterized in that** the determination of the route comprises the step of calculating the length of individual sections of the route, that the sum of the individual sections is the length of the determined route, that each section is defined by an exercise to be performed by the athlete in this section and that at least part of the determined route is matched by the processing unit against map data.

2. Method according to claim 1, **characterized in that** determining the route comprises the step of assigning at least one criterion to at least one section of the route.

3. Method according to anyone of claims 1 or 2, **characterized in that** the matching of the determined route comprises the comparison of condition related data of the map data with at least one criterion assigned to the determined route.

4. Method according to anyone of claims 1 to 3, **characterized in that** the processing unit (10) accesses a database (13) with personal entries of the athlete for obtaining personal values for calculating the length of the individual sections of the route.

5. Method according to anyone of claims 1 to 4, **characterized in that** the processing unit (10) accesses a database (13) with personal entries of the athlete for obtaining personal settings for assigning at least one criterion to at least one section of the route.

6. Method according to anyone of claims 1 to 5, **characterized in that** the processing unit (10) includes external input for calculating the length of the route and/or for assigning at least one criterion to at least one section of the route.

7. Method according to anyone of claims 1 to 6, **characterized in that** the processing unit (10) receives information for determining the route from a training or coaching system (15).

8. Method according to anyone of claims 2 to 7, **characterized in that** the at least one criterion for determining the route is derived from the exercise type for at least one section of the route.

9. Method according to anyone of claims 1 to 8, **characterized in that** the route is determined based on route definitions and training definitions.

10. Method according to anyone of claims 1 to 9, **characterized in that** the method is carried out when the athlete is using the planned route.

11. System for planning a route for an athlete, **characterized in that** the system comprises a processing unit (10) having a determining unit (11) configured for determining a route by calculating the length of individual sections of the route, wherein the sum of the individual sections is the length of the determined route, wherein each section is defined by an exercise to be performed by the athlete in this section and a matching unit (12) configured for matching at least part of the determined route against map data.

12. System according to claim 11, **characterized in that** the processing unit is configured to access a database (14) storing personal profiles.

13. System according to anyone of claims 11 or 12, **characterized in that** the processing unit (10) has an input interface for input from a user and/or from a training or coaching system (15).

14. System according to anyone of claims 11 to 13, **characterized in that** the matching unit (12) comprises a comparison unit configured for comparing criteria of the determined route with condition related map data.

15. System according to anyone of claims 11 to 14, **characterized in that** the system (1) is at least partially implemented in a portable device, in particular a mobile phone.

16. System according to anyone of claims 11 to 15, **characterized in that** the system is laid out to perform the method according to one of claims 1 to 10.

## Patentansprüche

1. Verfahren zum Planen einer Route für einen Athleten, wobei eine Verarbeitungseinheit (10) eine Route festlegt, **dadurch gekennzeichnet, dass** die Festlegung der Route den Schritt der Berechnung der Länge einzelner Abschnitte der Route umfasst, dass die Summe der einzelnen Abschnitte die Länge der festgelegten Route ist, dass jeder Abschnitt durch eine Übung definiert ist, die durch den Athleten in diesem Abschnitt durchzuführen ist und dass zumindest ein Teil der bestimmten Route von der Verarbeitungseinheit gegen Kartendaten abgeglichen wird.

2. Verfahren nach Anspruch 1, **dadurch gekennzeichnet, dass** das Festlegen der Route den Schritt der Zuordnung von mindestens einem Kriterium zu mindestens einem Abschnitt der Route umfasst.

3. Verfahren nach einem der Ansprüche 1 oder 2, **dadurch gekennzeichnet, dass** der Abgleich der festgelegten Route den Vergleich von bedingungsbezogenen Daten der Kartendaten mit zumindest einem Kriterium, das der festgelegten Route zugeordnet ist, umfasst.

4. Verfahren nach einem der Ansprüche 1 bis 3, **dadurch gekennzeichnet, dass** die Verarbeitungseinheit (10) auf eine Datenbank (13) mit persönlichen Einträgen des Athleten zugreift, um persönliche Werte zur Berechnung der Länge der individuellen Abschnitte der Route zu erhalten.

5. Verfahren nach einem der Ansprüche 1 bis 4, **dadurch gekennzeichnet, dass** die Verarbeitungseinheit (10) auf eine Datenbank (13) mit persönlichen Einträgen des Athleten zugreift, um persönliche Einstellungen für die Zuordnung mindestens eines Kriteriums zu mindestens einem Abschnitte der Route zu erhalten.

6. Verfahren nach einem der Ansprüche 1 bis 5, **dadurch gekennzeichnet, dass** die Verarbeitungseinheit (10) externe Eingaben für die Berechnung der Länge der Route und/oder für die Zuordnung mindestens eines Kriteriums zu mindestens einem Abschnitt der Route einschließt.

7. Verfahren nach einem der Ansprüche 1 bis 6, **dadurch gekennzeichnet, dass** die Verarbeitungseinheit (10) Informationen für die Festlegung der Route von einem Trainings- oder Coaching-System erhält.

8. Verfahren nach einem der Ansprüche 2 bis 7, **dadurch gekennzeichnet, dass** zumindest ein Kriterium zur Festlegung der Route von dem Übungstyp für zumindest einen Abschnitt der Route abgeleitet wird.

9. Verfahren nach einem der Ansprüche 1 bis 8, **dadurch gekennzeichnet, dass** die Route basierend auf Routendefinitionen und Trainingsdefinitionen festgelegt wird.

10. Verfahren nach einem der Ansprüche 1 bis 9, **dadurch gekennzeichnet, dass** das Verfahren durchgeführt wird, wenn der Athlet die geplante Route benutzt.

11. System zur Planung einer Route für einen Athleten, **dadurch gekennzeichnet, dass** das System eine Verarbeitungseinheit (10), die eine Festlegungseinheit (11) aufweist, die für die Festlegung einer Route durch Berechnung der Länge einzelner Abschnitte der Route ausgelegt ist, wobei die Summe der einzelnen Abschnitte die Länge der festgelegten Route ist, wobei jeder Abschnitt durch eine Übung, die durch den Athleten in diesem Abschnitt ausgeführt werden soll, definiert ist und eine Abgleicheinheit (12) umfasst, die für den Abgleich zumindest eines Teils der festgelegten Route gegen Kartendaten ausgelegt ist.

12. System nach Anspruch 11, **dadurch gekennzeichnet, dass** die Verarbeitungseinheit (10) ausgelegt ist, um auf eine Datenbank, in der persönliche Profile gespeichert sind, zuzugreifen.

13. System nach einem der Ansprüche 11 oder 12, **dadurch gekennzeichnet, dass** die Verarbeitungseinheit (10) eine Eingabeschnittstelle für Eingaben von einem Nutzer und/oder von einem Trainings- oder Coaching-System (15) aufweist.

14. System nach einem der Ansprüche 11 bis 13, **dadurch gekennzeichnet, dass** die Abgleicheinheit (12) eine Vergleichseinheit umfasst, die ausgelegt ist, um Kriterien der festgelegten Route mit bedingungsbezogenen Kartendaten zu vergleichen.

15. System nach einem der Ansprüche 11 bis 14, **dadurch gekennzeichnet, dass** das System (1) zumindest teilweise in einem tragbaren Gerät, insbesondere in einem Mobiltelefon, implementiert ist.

16. System nach einem der Ansprüche 11 bis 15, **dadurch gekennzeichnet, dass** das System ausgelegt ist um das Verfahren nach einem der Ansprüche 1 bis 10 auszuführen.

## Revendications

1. Procédé de programmation d'un itinéraire pour un athlète, dans lequel une unité de traitement (10) détermine un itinéraire, **caractérisé en ce que** la détermination de l'itinéraire comprend l'étape de calcul de la longueur de sections individuelles de l'itinéraire, **en ce que** la somme des sections individuelles est la longueur de l'itinéraire déterminé, **en ce que** chaque section est définie par un exercice à exécuter par l'athlète dans cette section et **en ce que**, au moins une partie de l'itinéraire déterminé est identifiée par l'unité de traitement par rapport à des données de cartographie.

2. Procédé selon la revendication 1, **caractérisé en ce que** la détermination de l'itinéraire comprend l'étape d'affectation d'au moins un critère à au moins une section de l'itinéraire.

3. Procédé selon l'une quelconque des revendications 1 ou 2, **caractérisé en ce que** l'identification de l'itinéraire déterminé comprend la comparaison de données associées à une condition des données de cartographie avec au moins un critère affecté à l'itinéraire déterminé.

4. Procédé selon l'une quelconque des revendications 1 à 3, **caractérisé en ce que** l'unité de traitement (10) accède à une base de données (13) comportant des entrées personnelles de l'athlète afin d'obtenir des valeurs personnelles permettant le calcul de la longueur des sections individuelles de l'itinéraire.

5. Procédé selon l'une quelconque des revendications 1 à 4, **caractérisé en ce que** l'unité de traitement (10) accède à une base de données (13) comportant des entrées personnelles de l'athlète afin d'obtenir des paramètres personnels permettant l'affectation d'au moins un critère à au moins une section de l'itinéraire.

6. Procédé selon l'une quelconque des revendications 1 à 5, **caractérisé en ce que** l'unité de traitement (10) comporte une entrée externe afin de calculer la longueur de l'itinéraire et/ou d'affecter au moins un critère à au moins à une section de l'itinéraire.

7. Procédé selon l'une quelconque des revendications 1 à 6, **caractérisé en ce que** l'unité de traitement (10) reçoit des informations permettant de déterminer l'itinéraire à partir d'un système entraînement ou de soutien (15).

8. Procédé selon l'une quelconque des revendications 2 à 7, **caractérisé en ce que** le ou les critères de détermination de l'itinéraire sont déduits du type d'exercice pour au moins une section de l'itinéraire.

9. Procédé selon l'une quelconque des revendications 1 à 8, **caractérisé en ce que** l'itinéraire est déterminé sur la base de définitions d'itinéraire et de définitions d'entraînement.

10. Procédé selon l'une quelconque des revendications 1 à 9, **caractérisé en ce que** le procédé est mis en oeuvre lorsque l'athlète utilise l'itinéraire programmé.

11. Dispositif de programmation d'un itinéraire pour un athlète, **caractérisé en ce que** le dispositif comprend une unité de traitement (10) comportant une unité de détermination (11) configurée afin de déterminer un itinéraire en calculant la longueur de sections individuelles de l'itinéraire, dans lequel la somme des sections individuelles est la longueur de l'itinéraire déterminé, dans lequel chaque section est définie par un exercice à exécuter par l'athlète sur cette section, et une unité d'identification (12) configurée afin d'identifier au moins une partie de l'itinéraire déterminé par rapport à des données de cartographie.

12. Dispositif selon la revendication 11, **caractérisé en ce que** l'unité de traitement est configurée de manière à accéder à une base de données (14) afin de mémoriser des profils personnels.

13. Dispositif selon l'une quelconque des revendications 11 ou 12, **caractérisé en ce que** l'unité de traitement (10) présente une interface d'entrée afin d'assurer une entrée à partir d'un utilisateur et/ou d'un dispositif d'entraînement ou de soutien.

14. Dispositif selon l'une quelconque des revendications 11 à 13, **caractérisé en ce que** l'unité d'identification (12) comprend une unité de comparaison configurée afin de comparer des critères de l'itinéraire déterminé à des données de cartographie associées à une condition.

15. Dispositif selon l'une quelconque des revendications 11 à 14, **caractérisé en ce que** le dispositif (1) est au moins partiellement mis en oeuvre dans un dispositif portable, en particulier, un téléphone mobile.

16. Dispositif selon l'une quelconque des revendications 11 à 15, **caractérisé en ce que** le dispositif est agencé afin d'exécuter le procédé selon l'une des revendications 1 à 10.
